(19) Europäisches Patentamt
European Patent Office
Office européen des brevets

(11) Veröffentlichungsnummer: **0 249 715 B1**

(12) **EUROPÄISCHE PATENTSCHRIFT**

(45) Veröffentlichungstag der Patentschrift: **13.03.91**

(51) Int. Cl.5: **C08L 67/02**, //(C08L67/02, 65:00)

(21) Anmeldenummer: **87105739.4**

(22) Anmeldetag: **16.04.87**

# (54) Schlagzähe Polyester-Formmassen.

(30) Priorität: **18.06.86 DE 3620432**

(43) Veröffentlichungstag der Anmeldung:
**23.12.87 Patentblatt 87/52**

(45) Bekanntmachung des Hinweises auf die Patenterteilung:
**13.03.91 Patentblatt 91/11**

(84) Benannte Vertragsstaaten:
**AT BE CH DE ES FR GB IT LI LU NL SE**

(56) Entgegenhaltungen:
**DE-A- 3 518 277**
**US-A- 4 522 979**

(73) Patentinhaber: **HÜLS AKTIENGESELLSCHAFT**
**Patentabteilung / PB 15 - Postfach 13 20**
**W-4370 Marl 1(DE)**

(72) Erfinder: **Bartz, Wilfried, Dr.**
**Stargarder Strasse 12**
**W-4370 Marl(DE)**

**EP 0 249 715 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind schlagzähe Polyester-Formmassen.

Polyester sind bekannte und bewährte Konstruktionswerkstoffe, die sich z. B. nach Spritzgieß- oder Extrusionsverfahren verarbeiten lassen. In der Regel weisen Polyester eine gute Zähigkeit und Festigkeit auf. Für bestimmte Anwendungen sind jedoch Verbesserungen hinsichtlich der Schlag- und Kerbschlagzähigkeit insbesondere bei tiefen Temperaturen erwünscht.

Gewisse Verbesserungen lassen sich dadurch erreichen, daß Copolyester verwendet werden, die teilweise ausgewählte Diole bzw. Dicarbonsäuren enthalten (Angew. Makromol. Chemie 128 , 203 ff. (1984). Um jedoch auch bei Temperaturen bis zu -40 °C herab gute Kerbschlagzähigkeiten zu erzielen, sind diese Maßnahmen nicht ausreichend, bzw. der molare oder gewichtsmäßige Anteil der Modifizierungskomponenten muß so hoch gewählt werden, daß wesentliche Eigenschaften der Polyester verlorengehen.

Eine andere Maßnahme, um zu kälteschlagzähen Polyesterformmassen zu gelangen, ist die Verwendung von Polyesterblends, worunter in diesem Zusammenhang die innige Vermischung der thermoplastischen Polyester mit zähen Elastomeren oder zähen, hochmolekularen Thermoplasten verstanden wird. Spezielle Grundeigenschaften der Zusatzpolymeren können dadurch auf die Polyesterblends übertragen werden, ohne die typischen Polyestereigenschaften zu zerstören.

Um Polyesterblends mit zufriedenstellenden Eigenschaften zu erhalten, sind die zuzumischenden Polymeren jeweils auf den Anwendungsfall und den jeweiligen Polyester-Typ zu optimieren. Da derartige Sonderpolymere in der erforderlichen Auswahl nicht am Markt verfügbar sind, besteht in der Regel das Problem, daß jeweils spezielle Produkte in zumeist kleinen Mengen auf kostenintensive Art hergestellt werden müssen.

Wegen dieser Probleme wird in der Praxis bei der Herstellung der Polyester-Verschnittpolymeren ein zweiter Weg beschritten: Man greift auf die in großer Menge und Vielfalt verfügbaren olefinischen Polymeren, wie z. B. Polyethylen oder Ethylen/Propylen/Dien-Copolymeren, zurück, die eine hohe (Kälte- oder Kerb-)Schlagzähigkeit aufweisen.

Die offensichtlich bevorzugte und wirkungsvollste Ausführungsform dieses zweiten Weges besteht in der Pfropfung von hochmolekularen olfenischen Elastomeren, wie z. B. EP(D)M-Kautschukenoder hydrierten Styrol/Butadien-Blockcopolymeren, mit monomeren Alpha,Beta-ungesättigten Carboxyl-, Carboxyanhydrid- oder Carbonsäureester-Derivaten, wie z. B. Maleinsäure(anhydrid), Fumarsäure, Acrylsäure, Methacrylsäure bzw. ihren Estern. Die Pfropfung kann in Lösung oder in der Schmelze mit oder ohne Zusatz radikalbildender Zusätze erfolgen; solche Verfahren sind beispielhaft der US-PS 3 882 194 oder der DE-OS 24 01 149 zu entnehmen.

Alle für den oben beschriebenen alternativen Weg brauchbaren Produkte müssen ein hohes Molgewicht aufweisen und besitzen demzufolge hohe Schmelzviskositäten, wenn sie gute Ergebnisse in den Polyesterblends bewirken sollen. Zugleich werden optimale Eigenschaften und Wirkungsgrade nur dann erzielt, wenn die Polymeren feindispers in der Polyestermatrix verteilt sind. Diese Einarbeitung bereitet wegen der hohen Viskosität der Zusatzpolymeren und wegen der ungünstigen Viskositätsrelation Polyester/Zusatzpolymer Schwierigkeiten. Durchsatzmenge und Schwankungen der Scherbedingungen erschweren die Herstellung einer reproduzierbar guten Qualität. Die Verwendung stark scherender Mischaggregate senkt zwar die Streuung der Werte, erfordert jedoch einen hohen Energieaufwand und kann zu Schädigungen der Polyesterblends führen.

Aufgabe der Erfindung ist es, unter Beibehaltung der bekannten guten Eigenschaften die Nachteile des Standes der Technik zu vermeiden.

Die Aufgabe wurde gelöst durch Polyester-Formmassen, erhältlich, indem man ein Gemisch bestehend aus

A. 60 bis 98 Gewichtsprozent eines linearen Polyesters, auf der Basis von aromatischen Dicarbonsäuren und aliphatischen und/oder cycloaliphatischen Diolen, mit einer Viskositätszahl (DIN 16 779) von größer 80 $cm^3/g$

und

B. 2 bis 40 Gewichtsprozent eines Polyalkenameren mit einer Viskositätszahl im Bereich von 50 bis 250 $cm^3/g$ (gemessen analog DIN 53 726 bei 25 °C in Toluol bei einer Konzentration von 0,5 g/100 $cm^3$ Lösung),

anschließend an das Mischen mit 0,05 bis 5 Gewichtsprozent, bezogen auf die Summe der Komponenten A und B, eines organischen Radikalbildners oberhalb dessen Zersetzungstemperatur behandelt.

Als Polyester eignen sich lineare, film- oder faserbildende, teilkristalline Kondensationsproukte aus aromatischen Dicarbonsäuren mit 8 bis 14 Kohlenstoffatomen und mindestens einem Diol der Formel $HO-(CH_2)_nOH$, n = 2 bis 12, und/oder Neopentylglykol und/oder 1.4-Cyclohexandimethanol. Bis 20 Mol-% der

aromatischen Dicarbonsäuren können durch (cyclo)aliphatische Dicarbonsäuren mit 2 bis 12 Kohlenstoffatomen ersetzt sein.

Bevorzugte Polyester stellt die Gruppe der Poly(alkylenterephthalate) dar. Als Poly(alkylenterephthalate) werden neben Poly(propylenterephthalat) bevorzugt Poly(ethylenterephthalat) und Poly(butylenterephthalat) eingesetzt.

Bis zu 20 Mol-%, vorzugsweise 5 bis 15 Mol-%, der Terephthalsäure im Poly(alkylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-%, vorzugsweise 5 bis 15 Mol-%, des Diols können durch aliphatische oder cycloaliphatische Diole, wie beispielsweise Ethylenglykol, Propandiol-(1.3), Butandiol-(1.4), Hexandiol-(1.6), Neopentylglykol, 1.4-Cyclohexandimethanol, Dodecandiol-(1.12) o. ä. ersetzt sein.

Das erfindungsgemäß verwendete Poly(alkylenterephthalat) wird in üblicher Weise durch Um- oder Veresterung und anschließende Polykondensation von Terephthalsäure oder deren polyesterbildenden Derivaten sowie dem entsprechenden Diol in Gegenwart von Katalysatoren hergestellt (Sorensen und Campbell, Preparative Methods oder Polymer Chemistry, Interscience Publishers Inc., N.Y., 1961, Seiten 111 bis 127; Kunststoff-Handbuch, Band VIII, C. Hanser Verlag München, 1973, bzw. Journal of Polymer Science, Part A 1, 4 , Seiten 1851 bis 1859, 1966).

Neben Homo- und Copolyestern können auch Polyestergemische eingesetzt werden, wobei die Mischungsverhältnisse für die Erfindung unkritisch sind.

Die Polyester weisen Viskositätszahlen von größer 80 $cm^3/g$, vorzugsweise von 80 bis 240 $cm^3/g$, auf. Die Viskositätszahl (J) wird gemäß DIN 16 779, Teil 2, bestimmt.

Unter den Begriff Poly(alkylenterephthalat) werden auch Blockcopolyester gerechnet. Derartige Produkte werden z. B. in Chimia 28 (9), Seiten 544 bis 552 (1974) und in Rubber Chemistry and Technology 50 , Seiten 688 bis 703 (1977), beschrieben. Diese Blockcopolyester enthalten neben den o. g. aromatischen Dicarbonsäuren und Diolen ein Poly(oxyalkylen)diol mit einem Molgewicht im Bereich von etwa 600 bis 2.500. Bevorzugte Poly(oxyalkylen)diole sind Poly(oxyethylendiol), Poly(oxypropylen)diol und Poly(oxytetramethylen)diol. Der Anteil der Poly(oxyalkylen)diole liegt im Bereich von 4 bis 40 Gewichtsprozent, vorzugsweise von 10 bis 35 Gewichtsprozent (bezogen auf den genannten Blockcoplyester).

Polyalkenamere werden aus cyclischen Olefinen, die mindestens eine nicht substituierte Ringdoppelbindung aufweisen, mit Hilfe sogenannter Metathesekatalysatoren unter Öffnung des Ringes durch Polymerisation erhalten (DE-OSS 15 70 940, 16 45 038, 17 20 798, 17 70 143 und 18 05 158, DE-AS 12 99 868, GB-PSS 1 124 456, 1 194 013 und 1 182 975).

Unter cyclischen Olefinen werden ungesättigte Kohlenwasserstoffe mit 4 bis 12 (ausgenommen 6) Ring-Kohlenstoffatomen in einem oder mehreren Ringen verstanden, die in mindestens einem Ring mindestens eine nicht in Konjugation zu eventuell weiteren vorhandenen Doppelbindungen beliebigen Substitutionsgrades stehende, unsubstituierte Doppelbindung aufweisen, beispielsweise Cyclobuten, Cyclopenten, Cyclohepten, cis-und trans-Cycloocten, Cyclononen, Cyclodecen, Cycloundecen, cis- und trans-Cyclododecen, cis-cis-Cyclooctadien-(1.5), 1-Methylcyclooctadien-(1.5), 3-Methylcyclooctadien-(1.5), 3.7-Dimethylcyclooctadien-(1.5).

Die Doppelbindungen in den Polyalkenameren können in der cis- oder trans-Form vorliegen. Bevorzugt ist ein solcher Gehalt an trans-Doppelbindungen, daß die Polymeren einen hinreichenden kristallinen Anteil aufweisen, daß sie bei Raumtemperatur praktisch klebfrei und damit in Granulat-, Krümel-, Schrot- oder Pulverform gut handhabbar sind.

Geeignet sind Polyalkenamere mit Molekulargewichten entsprechend einer Viskositätszahl von 50 bis 250 $cm^3/g$, vorzugsweise 80 bis 160 $cm^3/g$, gemessen bei 25 °C in Toluol bei einer Konzentration von 0,5 g/100 $cm^3$ Lösung.

Polyalkenamere als solche sowie ihre Herstellung sind bekannt (K. J. Ivin, Olefin Metathesis, S. 190 ff. (1983), Academic Press).

Die Polyalkenamere können Epoxy-, Carboxyl-, Carbonsäureanhydrid-oder -estergruppen als funktionelle Gruppen aufweisen.

Die Einführung dieser funktionellen Gruppen in die Polyalkenamere erfolgt nach bekannten Verfahren in Lösung oder in der Schmelze.

Epoxygruppen lassen sich beispielsweise durch partielle Epoxidierung der Doppelbindungen mit Persäuren einführen. Der Gehalt an Epoxidsauerstoff sollte bei 0,5 bis 9, vorzugsweise 3 bis 8, Masse-% liegen. Alternativ gelangt man durch Pfropfung mit beispielsweise Glycidylmethacrylat zu brauchbaren Epoxyderivaten. Die Einführung von Carboxyl- bzw. Carbonsäureanhydridgruppen erfolgt durch Pfropfung mit geeigneten ungesättigten Monomeren, wie z. B. (Meth)acrylsäure, Maleinsäure(anhydrid), Fumarsäure,

Maleinsäuremonoester, Fumarsäuremonoester, Norbornendicarbonsäureanhydrid, Itaconsäure(anhydrid) sowie den entsprechenden Methyl- bzw. Ethylestern der Säuren. Erfahrungsgemäß reicht ein Gehalt an gepfropftem Monomer von 0,2 bis 5 Gewichtsprozent, vorzugsweise von 0,5 bis 4 Gewichtsprozent - bezogen auf das modifizierte Polyalkenamere.

Die Modifizierung der Polyalkenamere ist nicht Gegenstand dieser Erfindung. Ob ein ausreichender Pfropfungsgrad vorliegt, ist für den Fachmann durch einen einfachen Versuch zu ermitteln. Neben den erfindungsgemäßen funktionellen Gruppen können weitere funktionelle Gruppen oder Substituenten eingeführt werden. Alle Modifizierungsmaßnahmen sind so durchzuführen, daß keine Vernetzung und/oder störende Molgewichtserhöhung bei den Polyalkenameren eintreten. Der Gelgehalt der modifizierten Polyalkenamere, bestimmt als unlöslicher Anteil in heißem Toluol, muß kleiner 10 Gewichtsprozent, vorzugsweise kleiner 5 Gewichtsprozent, betragen; die Viskositätszahlen sollen nicht wesentlich, d. h. maximal 20 %, oberhalb der der Ausgangspolyalkenamere liegen.

Neben den Komponenten A. und B. können die Formmassen noch die Komponente C. enthalten. Hierbei kann es sich einerseits um Epoxidharze mit einer mittleren molaren Epoxid-Funktionalität 1.5 bis 3 handeln. Bevorzugt werden Glycidyletherderivate des Bisphenol A mit Epoxidgehalten größer gleich 0.08 Mol/100 g. Andererseits eignen sich Isocyanate mit im Mittel 1.8 bis 4, vorzugsweise 2 bis 3.5 NCO-Gruppen pro Mol. Bevorzugt werden aliphatische Isocyanate, insbesondere Isophorondiisocyanat und seine höhermolekularen Derivate, wie das cyclotrimerisierte Isophorondiisocyanat (US-PS 3 919 218).

Bei Verwendung dieser modifizierten Polyalkenamere enthalten die erfindungsgemäßen Formmassen neben dem Polyester 2 bis 40 Gewichtsprozent, vorzugsweise 5 bis 30 Gewichtsprozent, Polyalkenamer. Wird neben den Komponenten A. und B. noch die Komponente C. eingesetzt, so ist letztere zu 0,1 bis 5 Gewichtsprozent, bezogen auf die Summe der Komponenten A. und B., in der Formmasse enthalten.

In einer weiteren Ausgestaltung der Erfindung können die Polyalkenamere auch direkt, d. h. ohne eine Modifizierung mit Endgruppen, eingesetzt werden.

Für diesen Fall empfiehlt es sich, Polyester einzusetzen, deren Dicarbonsäureanteil mindestens zu 50 Mol-% aus Terephthalsäure besteht und die einen Gehalt von - in der Summe - mindestens 5 Mol-%, vorzugsweise 10 bis 30 Mol-%, an Diolen der allgemeinen Formel I.

$$HO - (CH_2)_n - OH \qquad I.$$

und/oder an Dicarbonsäuren der allgemeinen Formel II.

$$HOOC - (CH_2)_{n-2} - COOH \qquad II.$$

mit n größer gleich 8, vorzugsweise 8 bis 14, aufweisen. Der Gehalt an diesen Diolen bzw. Dicarbonsäuren ist auf die Gesamtmenge an Diolen und Dicarbonsäuren bezogen. Daneben können die Polyester auch die weiter oben aufgezählten Diole und Dicarbonsäuren enthalten.

Bei Verwendung der unmodifizierten Polyalkenamere enthalten die erfindungsgemäßen Formmassen neben dem Polyester in der Regel 2 bis 30 Gewichtsprozent, vorzugsweise 5 bis 25 Gewichtsprozent Polyalkenamer. Auf den Einsatz der Komponente C. kann hier verzichtet werden.

Wesentlich für die erfindungsgemäßen Formmassen ist, daß vor der Einwirkung - d. h. Zerfall - des organischen Radikalbildners die Polyalkenameren zunächst in dem Polyester durch Schmelzemischen fein dispergiert werden. Der mittlere Teilchendurchmesser der Polyalkenamer-Phase soll kleiner gleich 10 µm, vorzugsweise kleiner gleich 1 m, betragen. Das Einarbeiten von Polyalkenameren ist problemlos in einem handelsüblichen Doppelschneckenkneter zu erreichen. Wenn durch Verwendung von Schnecken mit z. B. Knetblöcken oder Zahnscheiben die Mischwirkung zusätzlich unterstützt wird, lassen sich hohe Durchsätze erzielen. Die Temperatur der Schmelze liegt üblicherweise 10 bis 80 °C über der Schmelztemperatur der Polyester.

Als organische Radikalbildner für die Behandlung der Formmassen eignen sich handelsübliche Azoverbindungen oder Peroxide, vorzugsweise Dialkylperoxide oder Alkylpersäureester.

Beispiele für geeignete Radikalbildner sind t-Butylperneodecanoat, t-Amylperpivalat, t-Butylperpivalat, Bis-(3.5.5.trimethylhexanoyl)-peroxid, Dioctanoylperoxid, Didecanoylperoxid, Dilauroylperoxid, t-Butyl-per-(2-ethylhexanoat), t-Butylperisobutyrat, t-Butyl-permaleinat, 1.1-Bis-(t-butylperoxy-3.3.5-trimethyl-cyclohexan, 1.1-Bis-(t-butylperoxy)-cyclohexan, t-Butylperoxy-isopropylcarbonat, t-Butyl-per-(3.5.5-trimethylhexanoat),

2.5-Dimethylhexan-2.5-diperbenzoat, t-Butylperacetat, t-Butyl-perbenzoat, 5-Amylperbenzoat, 2.2-Bis-(t-butylperoxy)-butan, Dicumylperoxid, 2.5-Dimethylhexan-2.5-di-t-butylperoxid, t-Butyl-cumylperoxid, Bis-(t-butylperoxy)-3.5-dimethyldioxolan-1.2, Di-t-butylperoxid, 2.5-Dimethylhexin-(3)-2.5-di-t-butylperoxid, Bis-(t-butylperoxyisopropyl)-benzol sowie insbesondere 2.2'-Azo-bis-(2-acetoxybutan) und 2.2'-Azo-bis-(2-acetoxypropan).

Besonders bevorzugt werden Bis-t-alkylperoxide und t-Alkyl-persäureester.

Die organischen Radikalbildner werden in Mengen von 0,05 bis 5 Gewichtsprozent, vorzugsweise von 0,1 bis 3 Gewichtsprozent, bezogen auf die Gesamtmenge an Komponenten A. und B. eingesetzt.

Die Behandlung der erfindungsgemäßen Mischungen aus A. und B. kann auf verschiedenen Wegen geschehen. Es ist möglich, entsprechende Radikalbildner bereits während oder gleich nach dem Vermischen von A. und B. unter Bedingungen, die noch keinen spontanen Zerfall der Radikalbildner bewirken, in die Schmelze einzuarbeiten und sich dann gegebenenfalls beschleunigt durch Temperaturerhöhung, zersetzen zu lassen.

Es kann aber auch erst die Mischung aus A. und B. separat hergestellt werden.

In einem weiteren Schritt - z. B. während des Einarbeitens von weiteren Hilfs- und Zusatzstoffen, würde dann der Radikalbildner zugemischt und zur Einwirkung kommen gelassen. Eine weitere Möglichkeit besteht darin, den Radikalbildner in flüssiger Form auf festes Granulat aufzubringen und ihn eindiffundieren zu lassen, ohne daß es zu einer Zersetzung kommt. Hierbei sollten die Radikalbildner bei der gewählten Applikationstemperatur stabil sein und in flüssiger Form vorliegen; bevorzugt werden Radikalbildner, die bei 50 °C, vorzugsweise bei 23 °C, flüssig sind. Alternativ ist es möglich, die Radikalbildner auch in Lösung zu applizieren. Die Lösemittel können während oder nach der Zersetzungsphase durch Anlegen von Vakuum (z. B. Entgasungsstufe bei Extrusion) wieder entfernt werden. Vorteilhaft ist die Einbringung der Radikalbildner zusammen mit flüssigen Hilfs- und Zusatzstoffen sofern keine Störung der Zersetzung erfolgt. Der Dampfdruck der Radikalbildner sollte während der Imprägnierphase unter 1 bar liegen, um zusätzliche technische Maßnahmen zu vermeiden.

Für die erforderliche Zersetzung und Einwirkung des Radikalbildners würde es z. B. genügen, daß das Granulat auf eine Temperatur erwärmt wird, die oberhalb der Zersetzungstemperatur und bei einer ausreichenden Halbwertszeit des Radikalbildners liegt. In bezug auf die Formmasse sollte in diesem Fall die Temperatur mindestens 10 °C unterhalb der Schmelz- bzw. Erweichungstemperatur liegen.

Die Auswahl eines geeigneten Radikalbildners kann dem Fachmann überlassen werden, wobei im wesentlichen die Zerfallstemperatur bzw. die temperaturabhängige Halbwertszeit des Zerfalls des Radikalbildners und die vorgesehenen Zersetzungsbedingungen (z. B. längere Zeit bei relativ niedriger Temperatur in fester Phase oder kürzere Zeit bei hoher Temperatur in der Schmelze) aufeinander abgestimmt werden müssen unter Berücksichtigung der Temperaturbelastbarkeit der Formmasse. Entsprechende Produktdaten der Radikalbildner sind literaturbekannt. In der Regel genügt bei homogener Verteilung des Radikalbildners in der Schmelze oder in der festen Phase eine Einwirkungszeit von ca. 4 Halbswertszeiten bei der jeweiligen Temperatur.

Außer den Komponenten A., B. und ggf. C. können in den erfindungsgemäßen Formmassen noch übliche Hilfs- und Zusatzstoffe, wie Stabilisatoren, Verarbeitungshilfsmittel, Antistatika, Farb- und Flammschutzmittel etc. eingearbeitet werden. Es ist auch möglich, Füll- und Verstärkungsstoffe, wie Mineralien, Glas- oder Kohlenstoffasern, Mikroglaskugeln, Ruß u. ä. einzusetzen.

In untergeordneten Mengen können polymere Zusatzstoffe, wie z. B. Schlagzähmodifier usw. mitverwendet werden.

Sofern erwünscht, können die erfindungsgemäßen Formmassen einer thermischen Nachbehandlung unterworfen werden. Dazu wird die als Granulat vorliegende Masse in Abwesenheit von Sauerstof während mehrerer Stunden, vorzugsweise in einem Fließbett, auf eine Temperatur von größer gleich 5 °K unterhalb der Temperatur, bei welche die Masse zu schmelzen beginnt, erwärmt. Vorzugsweise beträgt die Temperatur jedoch mindestens 150 °C. Die thermische Nachbehandlung kann auch vorteilhaft nach den in den DE-PSS 30 33 468 und 33 33 469 beschriebenen Methoden durchgeführt werden. Die thermische Nachbehandlung kann auch in einem Entgasungsextruder durchgeführt werden.

Die erfindungsgemäßen Formmassen weisen den unerwarteten Vorteil auf, daß mit - relativ zum Stand der Technik - niedermolekularen, niedriger viskosen und dadurch besser einarbeitbaren Polymeren als die Schlagzähigkeit verbessernden Zusätzen gearbeitet werden kann und daß in der weiteren Ausgestaltung der Erfindung sogar auf eine Modifizierung (Funktionalisierung) verzichtet werden kann.

Die Molgewichte werden beim Polyester als Viskositätszahl (J) -gemessen nach DIN 16 779, Teil 2, in einer Mischung von o-Dichlorbenzol und Kresol (Gewichtsverhältnis 1 : 1 bei einer Konzentration von 0,5 g/100 $cm^3$ - und beim Polyalkenamer als Viskositätszahl (J) - gemessen bei 25 °C in Tolol - analog zu DIN 53 726 - bei einer Konzentration von 0,5 g/100 $cm^3$ - bestimmt.

Die Kerbschlagzähigkeitsprüfungen nach DIN 53 453 wurden an gespritzten Normkleinstäben bei den angegebenen Temperaturen durchgeführt. Zwischen dem Verspritzen und Prüfen wurden die Stäbe ca. 24 h bei 50 % rel. Luftfeuchtigkeit gelagert (23 °C).

In den folgenden Beispielen sind alle Angaben von Teilen bzw. % als Gewichtsteile bzw. Gewichtsprozent zu verstehen.

Mit Buchstaben gekennzeichnete Beispiele sind nicht erfindungsgemäß.-

Beispiele

Herstellung der funktionelle Gruppen aufweisenden Polyalkenamere

Den in den Beispielen verwendeten funktionalisierten Polyalkenameren lag als Ausgangsprodukt (TOR V) ein handelsübliches Polyoctenamer (J: 120 $cm^3/g$; Trans-Gehalt der Doppelbindungen: ca. 80 % -VESTENAMER® 8012) zugrunde. Es wurden daraus funktionalisierte Polyoctenamere (TOR 1 bis 4) hergestellt.

TOR 1

2 Gewichtsteile Fumarsäure und 98 Gewichtsteile Polyoctenamer wurden in einen Doppelschneckenextruder (Typ ZE 40 - Fa. Berstdorff) bei 310 °C umgesetzt und anschließend granuliert. Aus dem Vergleich des IR-Spektrums des Originalextrudates und des durch Umfällen von freien Monomeren gereinigten TOR 1 war zu erkennen, daß größer gleich 80 Gewichtsprozent der Fumarsäure gebunden sind.
Gelgehalt: kleiner 1 Gewichtsprozent
Viskositätszahl (J): 111 $cm^3/g$

TOR 2

Entsprechend TOR 1 wurde ein Produkt hergestellt aus 4 Gewichtsteilen Fumarsäure und 96 Gewichtsteilen Polyoctenamer.
Reaktionstemperatur: 310 bis 315 °C
Gelgehalt: 2 bis 3 Gewichtsprozent
Viskositätszahl (J): 112 $cm^3/g$

TOR 3

Polyoctenamer wurde in Chloroform in bekannter Weise mit $H_2O_2$/Ameisensäure epoxidiert und durch Einrühren in Methanol ausgefällt. Das säurefrei gewaschene pulverförmige Produkt enthielt 7,15 Gewichtsprozent Gesamtsauerstoff; durch Titration 0,1 n HCl in Tetrahydrofuran wurde ein Epoxidsauerstoff-Gehalt von 6,4 Gewichtsprozent gefunden.
Gelgehalt: kleiner 1 %
Viskositätszahl (J): 107 $cm^3/g$

TOR 4

Eine rieselfähige Mischung aus 90 Gewichtsteilen TOR V, 5 Gewichtsteilen Hydroxyethylmethacrylat, 3.3 Gewichtsteilen Kaolinit und 1.7 Gewichtsteilen pyrogener Kieselsäure wurde in einem Zweischneckenmischer (Typ 30.34; Fa. Leistritz) bei 307 bis 309 °C umgesetzt und granuliert. Aus dem Vergleich der IR-Spektren (Esterabsorptionsbande um 1 730 $cm^{-1}$) des Rohproduktes und des durch Umfällen gereinigten, vom Restmonomer befreiten TOR 4 ließ sich eine Umsetzung des Hydroxyethylacrylats von ca. 85 % berechnen.
Gelgehalt: kleiner 2 Gewichtsprozent
Viskositätszahl (J): 114 $cm^3/g$

Beispiele 1 bis 4 und A bis D (Tabelle 1)

Ein handelsübliches Poly(butylenterephthalat) (J: 110 $cm^3/g$; VESTODUR® 1000) und das Polyalkenamere TOR 1 wurden in den in Tabelle 1 angegebenen Mengen in einem Labordoppelschneckenkneter (Typ DSK 42/5; Fa. Brabender) bei ca. 260 °C und 20 Upm der Schnecken gemischt, als Strang extrudiert, granuliert und getrocknet. Das Poly(butylenterephthalat) sowie die halbe Menge der Mischungen mit TOR 1 wurden zu Vergleichszwecken nach dem Trocknen zu Normkleinstäben verspritzt. Die restlichen Mengen der Mischungen mit TOR 1 wurden mit 1 % Di-t-butylperoxid bei Raumtemperatur, dann zunächst 3 h bei 90 °C, anschließend 4 h bei 150 °C und dann 20 h bei 200 °C im Vakuum (kleiner gleich 2 mbar) thermisch behandelt. Die so erhaltenen Granulate wurden ebenfalls zu Normkleinstäben verspritzt und der Kerbschlagzähigkeitsprüfung nach DIN 53 453 unterworfen.

Tabelle 1

| Beispiel | PBTP*) Gew.-% | TOR-Typ | TOR Gew.-% | Peroxidbehandlung | Kerbschlagzähigkeit [kJ/m²] 23 °C | 0 °C | -20 °C | -40 °C |
|---|---|---|---|---|---|---|---|---|
| A | 100 | - | 0 | nein | 4 | - | - | 3 |
| B | 95 | TOR 1 | 5 | nein | 3.6 | 3.6 | 3.7 | 3.5 |
| 1 | 95 | TOR 1 | 5 | ja | 11.2 | 8.2 | 7.1 | 5.7 |
| C | 90 | TOR 1 | 10 | nein | 3.8 | 3.6 | 3.7 | 3.7 |
| 2 | 90 | TOR 1 | 10 | ja | 12.6 | 10.0 | 8.1 | 7.2 |
| D | 80 | TOR 1 | 20 | nein | 4.8 | 4.7 | 4.7 | 4.1 |
| 3 | 80 | TOR 1 | 20 | ja | oB**) | 10.3 | 8.2 | 7.5 |

*) Poly(butylenterephthalat)

**) ohne Bruch

Beispiele 4, 5 und E (Tabelle II)

80 Gewichtsteile des Poly(butylenterephthalats) des Beispiels 1 und 20 Gewichtsteile TOR 2 wurden in einem Doppelschneckenkneter (Typ ZE 40, Fa. Berstorff) bei ca. 250 °C Massetemperatur gemischt und anschließend granuliert.

Ein 1. Teil der Mischung wurde direkt bei 200 °C 20 h bei ca. 3 Torr thermisch nachbehandelt (N) und der Kerbschlagzähigkeitsprüfung unterworfen (Beispiel E). Ein 2. Teil wurde vor der Prüfung wie vorstehend thermisch und anschließend mit 1 Gewichtsprozent t-Butylperbenzoat ("P") behandelt (3 h/90 °C und 2 h/150 °C) (Beispiel 4). Ein 3. Teil wurde analog zum 2. Teil behandelt, mit dem Unterschied, daß die Reihenfolge der Behandlungsstufen vertauscht wurde (Beispiel 5).

Tabelle II

| Beispiel | Nachbehandlung | Kerbschlagzähigkeit [kJ/m²] 23 °C | 0 °C | -20 °C | -40 °C |
|---|---|---|---|---|---|
| E | N | 11.7 | 8.0 | 6.8 | 6.0 |
| 4 | N, dann P | 40 % oB*) 31.8 | 11.8 | 9.8 | 8.5 |
| 5 | P, dann N | 70 % oB*) 42.5 | 16.4 | 12.0 | 9.0 |

*) ohne Bruch

Beispiel 6 und F (Tabelle III)

80 Gewichtsteile des Poly(butylenterephthalats) des Beispiels 1 und 20 Gewichtsteile TOR 3 wurden bei 260 °C auf einem Doppelschneckenkneter (Typ 30.34; Fa. Leistritz) gemischt, anschließend granuliert und getrocknet. Im Beispiel F wurde dieses Gemisch ohne weitere Nachbehandlung zu Normkleinstäben verspritzt, im Beispiel 6 wurde das Gemisch zuvor mit 1 Gewichtsprozent Di-t-butylperoxid bei 90 °C behandelt und, nachdem das Granulat äußerlich trocken war, im Laufe von 3 h auf 200 °C aufgeheizt und 5 h bei dieser Temperatur gehalten.

Tabelle III

| Beispiel | Peroxid-behandlung | Kerbschlagzähigkeit [kJ/m²] 23 °C | 0 °C | -20 °C | -40 °C |
|---|---|---|---|---|---|
| F | nein | 7.5 | 6.4 | 5.1 | 4.4 |
| 6 | ja | oB*) | 13.9 | 10.1 | 7.5 |

*) ohne Bruch

Beispiel 7

80 Gewichtsteile eines Poly(butylenterephthalats) (J = 145 ml/g) wurde unter den gleichen Bedingungen wie in Beispiel 6 mit 20 Gewichtsteilen TOR 4 vermischt, granuliert und mit Peroxid nachbehandelt. Die Kerbschlagzähigkeitsprüfung ergab bei 23 °C Prüftemperatur zu 55 % keinen Bruch der Probe und bei -20 °C einen Wert von 8.3 kJ/m².

Beispiele 8, 9, G und H (Tabelle IV)

In einem Doppelschneckenkneter, dessen Zylinder aus 8 gleich langen Schüssen aufgebaut war, wurden 80 Gewichtsteile des Poly(butylenterephthalats) des Beispiels 1 und 20 Gewichtsteile TOR 1 gemischt, wobei in den 1. Schuß 40 Gewichtsteile Poly(butylenterephthalat) und das gesamte TOR 1 und in den 5. Schuß die restlichen Anteile des Poly(butylenterephthalats) dosiert wurden. Das erhaltene Gemisch wurde ohne (Beispiel G) und mit Peroxidbehandlung (1 Gewichtsprozent Di-t-butylperoxid; 3 h bei 90 °C - Beispiel 8) weiterverarbeitet. Bei einem weiteren Versuch wurde zusammen mit dem Poly(butylenterephthalat) in den 5. Schuß 1 Gewichtsprozent handelsübliches trimeres Isophorondiisocyanat

(IPDI -T 1890, Hüls AG) gegeben; dieses Gemisch wurde original (Beispiel H) und nach Peroxidbehandlung zu Formteilen verspritzt (Beispiel 9) und auf Kerbschlagzähigkeit geprüft.

Tabelle IV

| Beispiel | IPDI*) | Peroxid-behandlung | Kerbschlagzähigkeit [kJ/m²] 23 °C | 0 °C | -20 °C | -40 °C |
|---|---|---|---|---|---|---|
| G | nein | nein | 3.6 | 3.2 | 3.3 | 3.3 |
| 8 | nein | ja | 19.4 | 13.6 | 11.2 | 6.9 |
| H | ja | nein | 18.3 | 5.6 | 4.5 | 3.6 |
| 9 | ja | ja | oB**) | 12.8 | 10.8 | 8.1 |

*) trimeres Isophorondiisocyanat

**) ohne Bruch

Beispiele 10 bis 12, I bis N (Tabelle V)

20 Gewichtsprozent des Polyalkenamers TOR V werden mit 80 Gewichtsprozent Poly(butylenterephthalat), in dem unterschiedliche Anteile Terephthalsäure durch 1.12-Dodecandisäure ersetzt sind, in einem Labordoppelschneckenkneter (Typ DSK 42/5, Fa. Brabender) bei 250 bis 260 °C gemischt, anschließend granuliert und getrocknet. Auf das Granulat wird bei Raumtemperatur 1 Gewichtsprozent Di-t-butylperoxid aufgebracht und die Temperatur unter ständigem Umwälzen des Granulats bei Stickstoffabdeckung auf 90 °C und nach 3 h dann für weitere 3 h auf 150 °C erhöht. Die so erhaltenen Produkte werden verspritzt und auf Kerbschlagzähigkeit geprüft.

Tabelle V:

| Beispiel | PBTP*) J [cm³/g] | PBTP*) Mol-% DDS **) | TOR V Gew.-% | Kerbschlagzähigkeit [kJ/m²] 23 °C | Kerbschlagzähigkeit [kJ/m²] -40 °C |
|---|---|---|---|---|---|
| I | 107 | 0 | 0 | 4.0 | 3.0 |
| K | 107 | 0 | 20 | 3.3 | 2.3 |
| L | 117 | 8 | 0 | 2.8 | 2.8 |
| 10 | 117 | 8 | 20 | 8.8 | 5.1 |
| M | 180 | 15 | 0 | oB ***) | 4.2 |
| 11 | 180 | 15 | 20 | oB | 8.6 |
| N | 142 | 25 | 0 | oB | 4.4 |
| 12 | 142 | 25 | 20 | oB | 8.8 |

*) Poly(butylenterephthalat)

**) 1.12-Dodecandisäure

***) ohne Bruch

Beispiele 13, 14, O, P (Tabelle VI)

20 Gewichtsprozent TOR V und 80 Gewichtsprozent eines Poly(butylen-terephthalat-co-dodecandioat) mit 15 Mol-% 1.12-Dodecandisäure, J = 100 $cm^3/g$, wurden wie in den Beispielen 10 bis 12 auf einem Labordoppelschneckenkneter gemischt. Der Ausgangspolyester sowie ein Teil der erhaltenen Mischung wurden direkt verarbeitet und geprüft (Beispiele O, P). Das restliche Granulat der Mischung wurde wie in Beispiel 10 mit Peroxid nachbehandelt ("P"); die eine Hälfte der erfindungsgemäßen Formmasse wurde anschließend verspritzt und geprüft (Beispiel 13), während die zweite Hälfte vor der Verarbeitung einer thermischen Nachbehandlung ("N") bei 195 °C/16 h bei 2 bis 3 mbar unterworfen wurde.

Tabelle VI:

| Beispiel | TOR V Gew.-% | Nachbehandlung | Kerbschlagzähigkeit [kJ/m²] 23 °C | 0 °C | -20 °C | -40 °C |
|---|---|---|---|---|---|---|
| O | 0 | - | 5.2 | 1.5 | 1.4 | 1.4 |
| P | 20 | - | 3.6 | 2.8 | 2.4 | 2.3 |
| 13 | 20 | P | 18.3 | 10.1 | 7.6 | 5.6 |
| 14 | 20 | P, dann N | oB*) | 3/11 an **) 30.4 | 15.9 | 12.4 |

*) ohne Bruch

**) angebrochen

## Ansprüche

1. Schlagzähe Polyester-Formmasse, erhältlich, indem man ein Gemisch bestehend ans
A. 60 bis 98 Gewichtsprozent eines linearen Polyesters, auf Basis von aromatischen Dicarbonsäuren und aliphatischen und/oder cycloaliphatischen Diolen,mit einer Viskositätszahl (DIN 16 779) von größer 80 $cm^3/g$ und
B. 2 bis 40 Gewichtsprozent eines Polyalkenameren mit einer Viskositätszahl im Bereich von 50 bis 250 $cm^3/g$ (gemessen analog DIN 53 726 bei 25 °C in Toluol bei einer Konzentration von 0,5 g pro 100 $cm^3$ Lösung), ausschließend an das Mischen mit 0.05 bis 5 Gewichtsprozent, bezogen auf die Summe der Komponenten A. und B., eines organischen Radikalbildners oberhalb von dessen Zersetzungstemperatur behandelt.

2. Schlagzähe Polyester-Formmasse gemäß Anspruch 1,
dadurch gekennzeichnet,
daß als Komponente B. ein Polyalkenamer mit Epoxy-, Carboxyl-, Carbonsäureanhydrid- oder -estergruppen als funktionellen Gruppen eingesetzt wird.

3. Schlagzähe Polyester-Formmasse gemäß Anspruch 1 und 2,
dadurch gekennzeichnet,
daß das Gemisch als weiteren Bestandteil
C. 0.1 bis 5 Gewichtsprozent - bezogen auf die Summe der Komponenten A. und B. - eines Epoxidharzes mit einer mittleren molaren Epoxid-Funktionalität von 1,5 bis 3 enthält.

4. Schlagzähe Polyester-Formmasse gemäß Anspruch 1 und 2,
dadurch gekennzeichnet,
daß das Gemisch als weiteren Bestandteil
C. 0.1 bis 5 Gewichtsprozent - bezogen auf die Summe der Komponenten A. und B. - eines Isocyanats mit 1.8 bis 4 NCO-Gruppen pro Mol Isocyanat enthält.

5. Schlagzähe Polyester-Formmasse gemäß Anspruch 1,
enthaltend als Komponente A. einen Polyester mit einer Viskositätszahl (DIN 16 779) von größer 80 $cm^3/g$, dessen Dicarbonsäureanteil mindestens zu 50 Mol-% aus Terephthalsäure besteht und der einen Gehalt von - in der Summe - mindestens 5 Mol-% an Diolen der allgemeinen Formel I.

$$HO - (CH_2)_n - OH \qquad I.$$

und/oder an Dicarbonsäuren der allgemeinen Formel II.

$$HOOC - (CH_2)_{n-2} - COOH \qquad II.$$

mit n größer gleich 8 aufweist und wobei der Gehalt an diesen Diolen und Dicarbonsäuren auf die Gesamtmenge an Diolen und Dicarbonsäuren bezogen ist.

**Claims**

1. An impact-resistant polyester moulding composition which is obtainable by treating a mixture composed of
A. 60 to 98 per cent by weight of a linear polyester based on aromatic dicarboxylic acids and aliphatic and/or cycloaliphatic diols and having a viscosity number (DIN 16 779) of greater than 80 $cm^3/g$ and
B. 2 to 40 per cent by weight of a polyalkenamer having a viscosity number in the range of from 50 to 250 $cm^3/g$ (measured by the procedure of DIN 53 726 at 25 °C in toluene at a concentration of 0.5 g per 100 $cm^3$of solution),

subsequent to mixing, with 0.05 to 5 per cent by weight, relative to the total of components A. and B., of an organic free-radical former, at a temperature above the decomposition temperature of this free-radical former.

**2.** An impact-resistant polyester moulding composition according to claim 1, characterized in that a polyalkenamer containing epoxy, carboxyl, carboxylic anhydride or carboxylic ester groups as functional groups is used as component B.

**3.** An impact-resistant polyester moulding composition according to claim 1 or 2, characterized in that the mixture contains, as a further component,
C. 0.1 to 5 per cent by weight, relative to the total of the components A. and B., of an epoxy resin having an average molar epoxy functionality of 1.5 to 3.

**4.** An impact-resistant polyester moulding composition according to claim 1 or 2, characterized in that the mixture contains, as a further component,
C. 0.1 to 5 per cent by weight, relative to the total of components A. and B., of an isocyanate having 1.8 to 4 NCO groups per molecule of isocyanate.

**5.** An impact-resistant polyester moulding composition according to claim 1, containing as component A. a polyester which has a viscosity number (DIN 16 779) of greater than $80^3$ cm /g and whose dicarboxylic acid component is composed of terephthalic acid to the extent of at least 50 mol %, the said polyester containing, in total, at least 5 mol % of diols of the general formula I

$$HO - (CH_2)_n - OH \qquad I.$$

and/or of dicarboxylic acids of the general formula II

$$HOOC - (CH_2)_{n-2} - COOH \qquad II.$$

where n is greater than or equal to 8 and where the content of these diols and dicarboxylic acids is relative to the total amount of diols and dicarboxylic acids.

## Revendications

**1.** Masse à mouler à base de polyester, résistant au choc, obtenue en traitant, à la suite du brassage de ses composants, un mélange formé
A. de 60 à 98 % en poids d'un polyester linéaire à base d' acides dicarboxyliques aromatiques et de diols aliphatiques et/ou cyclo-aliphatiques, présentant un indice de viscosité (DIN 16 779) supérieur à 80 $cm^3$ par gramme, et
B. de 2 à 40 % en poids d'un poly-alcénamère présentant un indice de viscosité qui est compris dans un domaine de 50 à 250 $cm^3$ par gramme (mesuré d'une manière analogue à DIN 53 726, à 25 °C dans le toluène, à une concentration de 0,5 g pour 100 $cm^3$ de solution), par 0,05 à 5 % en poids, relativement à la somme des compo-sants A et B, d'un formateur organique de radicaux, au-dessus de la température de décomposition de celui-ci.

**2.** Masse à mouler à base de polyester, résistant au choc, selon la revendication 1,
caractérisée par le fait que l'on utilise, comme composant B, un poly-alcénamère présentant, comme groupes fonctionnels, des groupes époxy, carboxyle, anhydride d'acide carboxylique ou ester d'acide carboxylique.

**3.** Masse à mouler à base de polyester, résistant au choc, selon les revendications 1 et 2,
caractérisée par le fait que le mélange renferme, comme autre constituant,
C. de 0,1 à 5 % en poids, relativement à la somme des composants A et B, d'une résine époxyde

présentant une fonctionnalité molaire moyenne d'époxyde de 1,5 à 3.

4. Masse à mouler à base de polyester, résistant au choc, selon les revendications 1 et 2, caractérisée par le fait que le mélange renferme, comme autre constituant,
   C. de 0,1 à 5 % en poids, relativement à la somme des composants A et B, d'un isocyanate renfermant de 1,8 à 4 groupes NC0 par mole d'isocyanate.

5. Masse à mouler à base de polyester, résistant au choc, selon la revendication 1, caractérisée par le fait qu'elle renferme, comme composant A, un polyester d'un indice de viscosité (DIN 16 779) supérieur à 80 $cm^3$ par gramme, dont la fraction d'acide carboxylique est constituée, pour 50 mole-% au moins, par de l'acide téréphtalique, et qui présente, au total, une teneur d'au moins 5 mole-% de diols répondant à la formule générale I

$$HO - (CH_2)_n - OH \quad (I),$$

et/ou d'acides dicarboxyliques de la formule générale II

$$HOOC - (CH_2)_{n-2} - COOH \quad (II),$$

n étant supérieur à 8 et la teneur en ces diols et acides dicarboxyliques se rapportant à la quantité totale de diols et d'acides dicarboxyliques.